**Europäisches Patentamt**

**European Patent Office**

**Office européen des brevets**

(11) Veröffentlichungsnummer : **0 424 562 B1**

# (12) EUROPÄISCHE PATENTSCHRIFT

(45) Veröffentlichungstag der Patentschrift :
**26.02.92 Patentblatt 92/09**

(21) Anmeldenummer : **89119808.7**

(22) Anmeldetag : **25.10.89**

(51) Int. Cl.⁵ : **B65G 35/06, B65G 17/00, B65G 33/02, B23Q 7/14**

(54) **Palettenwechsler für einen linearen Horizontalförderer.**

(43) Veröffentlichungstag der Anmeldung :
**02.05.91 Patentblatt 91/18**

(45) Bekanntmachung des Hinweises auf die
Patenterteilung :
**26.02.92 Patentblatt 92/09**

(84) Benannte Vertragsstaaten :
**AT BE CH DE ES FR GB GR IT LI LU NL SE**

(56) Entgegenhaltungen :
**EP-A- 0 248 904
DE-A- 3 224 330
FR-A- 2 071 993
FR-A- 2 228 012
US-A- 4 532 869**

(73) Patentinhaber : **Weiss, Dieter
Danziger Strasse 6
W-6967 Buchen (DE)**

(72) Erfinder : **Weiss, Dieter
Danziger Strasse 6
W-6967 Buchen (DE)**

(74) Vertreter : **Hach, Hans Karl, Dr.
Tarunstrasse 23
W-6950 Mosbach-Waldstadt (DE)**

Jouve, 18, rue Saint-Denis, 75001 PARIS

## Beschreibung

Die Erfindung betrifft einen Palettenwechsler für eine lineare horizontale Förderbahn, mit einer Walze als Förderelement, die um eine Achse parallel zur Förderrichtung der Förderbahn drehbar gelagert ist, auf ihrem Umfang eine mit einem an einer Palette angeordneten Führungselement zusammenwirkende, wendelförmige Führungsnut aufweist, zur jeweiligen Walzenstirnseite hin offen ist und sich von einem Anschlag für eine in Bereitstellungsposition befindliche Palette bis zu einem diesem nachgeordneten Anschlag für eine in Bearbeitungsposition befindliche Palette erstreckt, für die in Bearbeitungsposition befindliche Palette einen sich in Umfangsrichtung erstreckenden Nutenabschnitt aufweist und für jeden Palettenwechsel rotierend angetrieben wird, wobei ein angetriebener Doppelgurt als Förderunterlage für die Paletten vorgesehen ist, der sich über die in Bereitstellungsposition und über die in Bearbeitungsposition befindlichen Paletten erstreckt.

Bei einem aus der DE-A-3224330 vorbekannten Palettenwechsler dieser Art weist die Führungsnut in der Mitte einen sich in Umfangsrichtung erstreckenden Nutenabschnitt auf und definiert dadurch eine einzige Bearbeitungsposition für jeweils eine Palette.

Aufgabe der Erfindung ist es, bei einem Palettenwechsler der eingangs genannten Art mit einfachen Mitteln die Wechselgeschwindigkeit zu erhöhen.

Diese Aufgabe wird dadurch gelöst, daß die Führungsnut an beiden Enden der Walze einen, den betreffenden Anschlag bildenden, sich in Umfangsrichtung erstreckenden Nutenabschnitt aufweist und daß beim Palettenwechsel die Walze eine Palette mit einer Fördergeschwindigkeit antreibt, die wesentlich höher ist als die Fördergeschwindigkeit des Doppelgurtes.

Durch die beiden sich in Umfangsrichtung erstreckenden Nutenabschnitte werden zwei Stillhaltepositionen definiert, eine für die Bearbeitungsposition und eine für eine Bereitstellungsposition der nächstfolgenden Palette. Die nachfolgende Palette kann dann in die Bearbeitungsposition allein durch Umdrehung der Walze nachgeführt werden, während gleichzeitig die bearbeitete Palette zur Weiterförderung freigegeben wird.

Die Erfindung macht sich dabei den Umstand zunutze, daß die Paletten auf dem Doppelgurt rutschen können, wie sie es in Bereitstellung bei dem bekannten Palettenwechsler auch tun, also auch schneller auf dem Doppelgurt vorausgeschoben werden können als der Umlaufgeschwindigkeit des Doppelgurtes entspricht.

Für einen reibungslosen Wechselvorgang ist es wichtig, daß die in Bearbeitungsposition befindliche Palette möglichst schnell abgefördert wird. Dazu sollte sie möglichst schnell ihre Trägheit überwinden und die Geschwindigkeit des Doppelgurtes aufnehmen. Das kann man unterstützen, indem dieser Palette bei Beginn des Wechselvorganges von dem Förderelement ein Schubs verliehen wird. Das ist sehr einfach dadurch erzielbar, daß der der Bearbeitungsposition zugeordnete Nutenabschnitt in einen achsparallel gerichteten Auslaufabschnitt mündet mit einer Austriebskurve an der Rückwand.

Beim Palettenwechsler der eingangs genannten Art soll im allgemeinen die Palette in der Bearbeitungsposition präzise ausgerichtet fixiert werden. Dem trägt eine Weiterbildung der Erfindung Rechnung, die dadurch gekennzeichnet ist, daß beide Randschienen je zwei einen zur Seite offenen Keilwinkel bildende, sich über die ganze Randschienenlänge erstreckende Keilflächen aufweisen, die mit da hinein formschlüssig passenden Keilelementen zusammenwirken und daß Keilelemente beidseitig entlang der Förderbahn der Keilflächen über die Bearbeitungsposition verteilt, aufgereiht und ortsfest befestigt sind.

Während bei der bekannten Vorrichtung die zum Fixieren der Palette vorgesehenen Greifer aktiv bewegt werden müssen, müssen die zu dem gleichen Zweck vorgesehenen Keilelemente aktiv nicht bewegt werden, sie werden allenfalls von der betreffenden Palette bewegt.

Allein dadurch ist eine beträchtliche Vereinfachung der konstruktiven Ausgestaltung möglich, die auch eine Verbesserung der Betriebssicherheit zur Folge hat.

Man kann die Keilelemente auch leicht so ausbilden, daß sie die in Bearbeitungsposition geratende Palette von den Gurtbändern abheben und damit Schleifenden Kontakt der weiter umlaufenden Gurtbänder beim Bearbeiten der Palette beziehungsweise der Auflage der Palette vermeiden. Eine entsprechende Weiterbildung, die dies ermöglicht, ist dadurch gekennzeichnet, daß ein oder mehrere Keilelemente beidseitig am förderabwärtigen Ende einer in Bereitstellungsposition befindlichen Palette angeordnet sind, daß die Höhenlage dieser der Bereitstellungsposition zugeordneten Keilelemente jeder Seite der Höhenlage einer auf den Gurtbändern liegenden Palette entspricht und daß die Höhenlage der folgenden, der Bearbeitungsposition zugeordneten Keilelemente der Höhenlage einer von den Gurtbändern um einen zur Entkupplung hinreichenden kleinen Betrag von 0,3 bis 10 mm (Millimeter), vorzugsweise 0,8 mm abgehobenen Palette entspricht.

Die der Bereitstellungsposition zugeordneten Keilelemente justieren in wünschenswerter Weise das vorauslaufende Ende der in Bereitstellungsposition befindlichen Palette und erleichtern so den Einlauf dieser Palette in die der Bearbeitungsposition zugeordneten Keilelemente. Für den notwendigen Höhenausgleich trifft man zweckmäßigerweise Maßnahmen an den der Bereitstellungsposition zugeordenten Keilelementen. Das kann beispielsweise dadurch geschehen, daß die Keilform der der Bereitstellungsposition zugeordneten Keilelemente das für den Höhenausgleich nötige Spiel bieten oder dadurch, daß die der Bereitstellungspösition zugeordneten Keilelemente zum Höhenausgleich zwischen zwei Endstellungen höhenverstellbar sind.

Die der Bearbeitungsposition zugeordneten Keilelemente werden zweckmäßig im Interesse einer soliden Fixierung der Palette, bezogen auf alle räumlichen Richtungen, ortsfest befestigt.

Zum Erleichtern des Anhebens des rückwärtigen Endes einer in die Bearbeitungsposition einlaufenden Palette sind vorzugsweise beidseitig je zwei Keilelemente dicht am förderaufwärtigen Ende der Bearbeitungsposition und dicht nebeneinander angeordnet.

Die Keilelemente können Gleiter sein, vorzugsweise werden aber Rollen eingesetzt, um Gleitwiderstand zu vermeiden. Eine dementsprechende Ausgestaltung, die bevorzugt ist, ist dadurch gekennzeichnet, daß die Keilflächen eine dachförmige, mit abgeflachter Spitze nach außen ragende Randrippe bilden und daß die Keilelemente um vertikale Achsen drehbar gelagerte Rollen sind, die je eine keilförmige Umfangsnut aufweisen.

Die Erfindung wird nun anhand der beigefügten Zeichnung näher erläutert.

In der Zeichnung zeigt:

Figur 1 einen Palettenwechsler für einen linearen Horizontalförderer von oben gesehen, teilweise aufgeschnitten,

Figur 2 den Teilschnitt II aus Figur 1,

Figur 3 die Walze aus Figur 1 von oben gesehen mit den Führungselementen der zugehörigen Paletten,

Figur 4 den Schnitt IV aus Figur 2,

Figur 5 den Schnitt V aus Figur 2,

Figur 6 eine Einzelheit gemäß dem Teilschnitt VI aus Figur 1,

Figur 7 eine Einzelheit gemäß dem Teilschnitt VII aus Figur 1 und

Figur 8 in der Darstellung entsprechend Figur 6 eine Abänderung des in Figur 1 bis 7 dargestellten Ausführungsbeispiels.

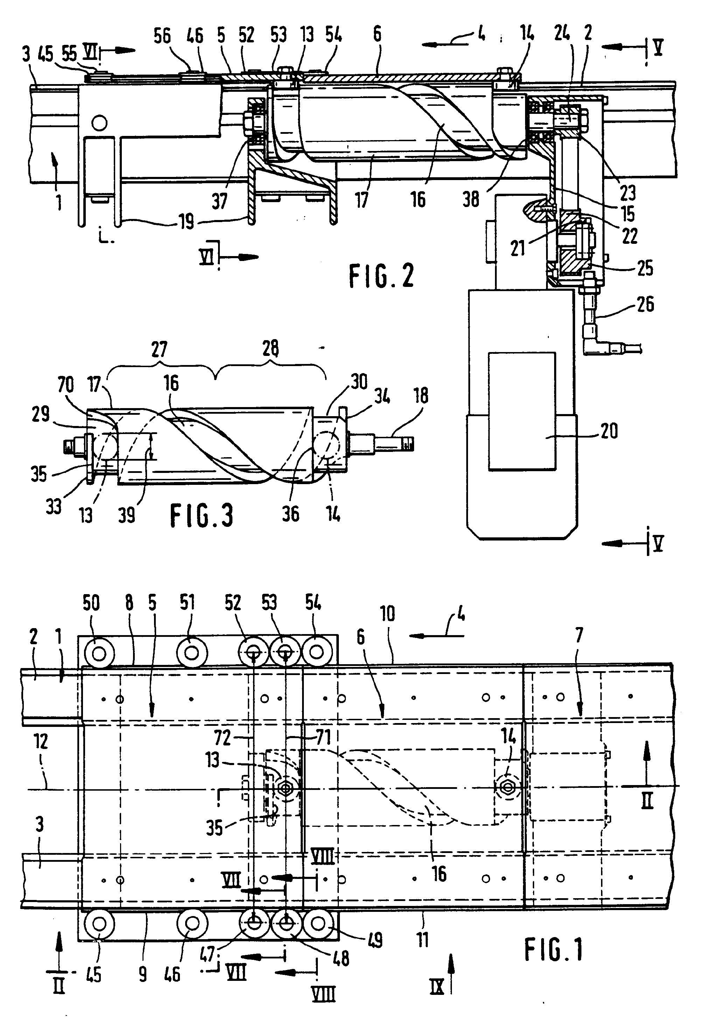

Der Horizontalförderer 1, von dem in Figur 1 und 2 nur ein kurzer Abschnitt dargestellt ist, weist zwei endlos umlaufende Gurtbänder 2 und 3 auf, deren obere Trumms in Figur 1 sichtbar sind und die eine horizontale, ständig in Pfeilrichtung 4 fortbewegte Unterlage für dort aufliegende Paletten, zum Beispiel die Paletten 5, 6 und 7 bilden. Die Paletten sind aufstaubar, das heißt an jede Palette, die auf den Gurtbändern 2, 3 liegt, kann die nachfolgende hinten anstoßen und die vordere vor sich herschieben.

Die Paletten 5, 6 und 7 sind rechteckige, stabile Platten mit beidseitig Randschienen 8 bis 11, die sich jeweils über die ganze Palettenlänge in Förderrichtung gemäß Pfeil 4 erstrecken. Jede Palette weist in ihrer Längsmitte 12, und zwar an ihrem förderaufwärtigen Ende, einen an der Unterseite herausragenden als Führungsrolle ausgebildete Mitnehmer 13, 14 auf. Diese Mitnehmer passen in die Führungsnut 16 ei ner Walze 17, die mit ihrer Achse 18 in Förderrichtung, also horizontal, unter der Mitte zwischen den Gurtbändern 2 und 3, die mit der Längsmitte 12 zusammenfällt, drehbar in Lagern 37, 38 gelagert ist. Das Lager 37 ist in einem Arretierergehäuse 19 und das Lager 38 in einem Wechslergehäuse 15 angeordnet. Die beiden Gehäuse 15 und 19 sind an durchgehenden Profilstangen des Horizontalförderers 1 befestigt.

Zum Antrieb der Walze dient ein Antriebsmotor 20, der eine Nockenscheibe 21 und eine koaxial und verdrehungssicher dazu auf die Motorabtriebswelle aufgesteckte Keilriemenscheibe 22 treibt. Diese Keilriemenscheibe treibt im Übersetzungsverhältnis 1 : 2 die Keilriemenscheibe 23, die auf der Walzenwelle 24 steckt. Die Nockenscheibe 21 weist einen Nocken 25 auf, demgegenüber ein Schalter 26 steht, der bei Gegenüberstellung des Schalters zum Nocken 25 den Antriebsmotor 20 abschaltet. Bei der nächsten Wiedereinschaltung des Antriebsmotors, die von einer nicht dargestellten Steuervorrichtung des Horizontalförderers ausgelöst wird, vollführt die Nockenscheibe 21 eine volle Umdrehung und die Walze 17 zwei volle Umdrehungen.

In allen Zeichnungen ist die Walze im Stillstand gezeichnet. Die Führungsnut 16 weist zwei volle Gänge auf. Die Führungsnut 16 weist an ihren beiden Enden je einen sich in Umfangsrichtung erstreckenden Nutenabschnitt 29, 30 auf, der über einen axialen Einlaufabschnitt 32 und einen axialen Auslaufabschnitt 31 an der betreffenden Stirnseite 33, 34 offen ist, und zwar der Abschnitt 31 mit einer Austriebskurve 70.

Die beiden Nutenabschnitte 29 und 30 bilden je einen Anschlag 35, 36. Der Anschlag 35 fixiert die Palette 5 in der Bearbeitungsposition und der Anschlag 36 fixiert die Palette 6, das ist die in der Reihe der nachfolgenden Paletten nächstfolgende, in Bereitstellungsposition. Die beiden Nu tenabschnitte 29, 30 und die beiden Anschläge 35, 36 erstrecken sich über den gemeinsamen Umfangswinkel 39, der mithin die Toleranz bestimmt für eine funktionsfähige Stillstandsstellung der Walze 17. Dem entspricht die Umfangsausdehnung des Nocken 25.

In der gezeichneten Stillstandsstellung der Walze 17 sind die beiden Paletten 5 und 6 durch die Anschläge 35, 36 präzise, bezogen auf die Förderrichtung, fixiert. Die Palette 6 ruht dabei auf den Gurtbändern 2 und 3, die unter der Palette während des Stillstandes der Palette 6 in der Bereitstellungsposition gleiten. Das gleiche gilt für alle nachfolgenden Paletten, die auf die Palette 6 auflaufen und dadurch ebenfalls stillgesetzt werden.

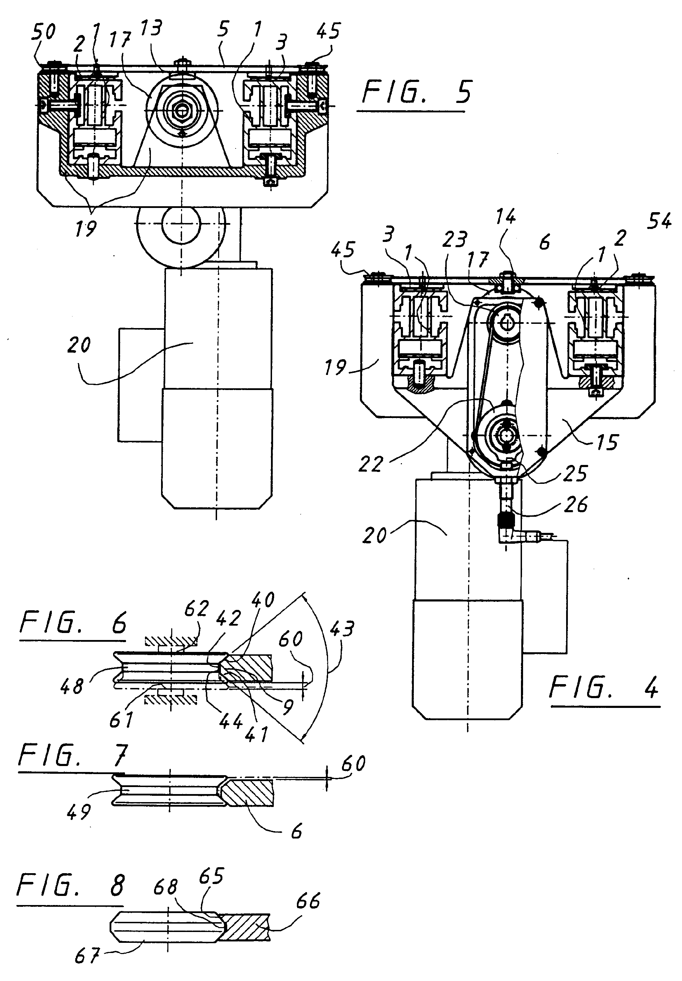

Die Randschienen 8, 9, 10 und 11 der Paletten sind, wie besonders gut aus Figur 6 ersichtlich, dachförmige, mit abgeflachter Spitze nach außen ragende Randrippen, die durch je zwei Keilflächen 40, 41 und eine Stirnfläche 42 gebildet werden. Die Keilflächen stehen im Winkel 43 zueinander und die Stirnfläche 42 steht senkrecht zu der durch die Gurtbänder 2 und 3 definierten Unterstützungsebene und symmetrisch zu den Keilflächen 40, 41. Der Winkel 43 ist vorzugsweise etwas kleiner als neunzig Grad. Die Keilflächen und die Stirnfläche erstrecken sich über die ganze Palettenlänge spiegelsymmetrisch auf beiden Seiten und sind bei allen Paletten gleich.

Zu diesen Randschienen passen formschlüssig keilförmige Umfangsnuten, zum Beispiel die Umfangsnut 44, von um vertikale Achsen 55, 56 ... drehbar am Gehäuse 19 gelagerten Rollen 45 bis 54. Diese Rollen sind ortsfest am Gehäuse 19 gelagert, das heißt, die Lager der Rollen sind in den drei orthogonalen räumlichen Richtungen fest montiert. Sie sind drehbar um Achsen senkrecht zur Zeichenebene der Figur 1.

Die Rollen 48 bis 53 sind auf die Bearbeitungsposition, die die Palette 5 einnimmt, verteilt und gegenüber der Höhenlage, die die auf den Gurtbändern 2 und 3 aufliegende Palette 6 einnimmt, um 0,8 mm angehoben und so angeordnet, daß die in Bearbeitungsposition befindliche Palette 5 formschlüssig stramm passend zwischen die Rollen 48 bis 53 paßt. Die Palette 5 ist auf diese Weise in ihrer Bearbeitungsposition etwas von den Gurtbändern 2 und 3 abgehoben, so daß sie keine Berührung mehr hat mit den Gurtbändern und die Gurtbänder nicht mehr an dieser Palette schleifen. Außerdem ist die Palette orthogonal in ihrer Betriebsstellung durch die Rollen 48 bis 53 justiert und in Verbindung mit dem Anschlag 35 in dieser Bearbeitungsstellung fixiert.

Die Rollen 49 und 54 sind am förderabwärtigen Ende der Bearbeitungsposition, die die Palette 6 einnimmt, angeordnet und haben, wie aus Figur 7 ersichtlich, eine etwas weitere Umfangsnut, so daß für die Palette 6 ein kleines Spiel 60 in Höhenrichtung verbleibt. In der Bereitstellungsposition liegt die Palette 6 am unteren Ende des Spiels 60 und ist dabei für den Einlauf in die Bearbeitungsposition im übrigen orthogonal vororientiert, wie in Figur 7 gezeichnet. Beim Einlauf in die Bearbeitungsposition wird die Palette 6 von den Rollen 47, 48, 52 und 53 in die Bearbeitungsposition angehoben und das Spiel 60 gestattet den für die in die Bearbeitungsposition einlaufende Palette erforderlichen Höhenausgleich. Die Rollen 47, 48, 52, 53 sind für das Anheben der in die Bearbeitungsposition einlaufenden Palette paarweise dicht nebeneinander ganz am förderaufwärtigen Ende der Bereitstellungsposition angeordnet.

Der Höhenausgleich kann gemäß einer Abänderung auch dadurch erzielt werden, daß die Rollen 49 und 54 exakt genauso ausgebildet werden wie die übrigen Rollen, also nicht mit Spiel in der Umfangsnut, aber auf ihrer Achse zwischen zwei durch Anschläge 61, 62 definierten Endstellungen auf und ab beweglich sind in einem Maße, wie es dem Spiel 60 entspricht. Diese Anschläge sind der Einfachheit halber in Figur 6 gestrichelt eingezeichnet, obwohl sie nicht zu der dort gezeichneten Rolle 48 gehören, sondern in dieser Abänderung zur Rolle 49 und 54.

In einer weiteren Abänderung können statt der Rollen auch nicht drehbare Keilelemente vorgesehen sein, an denen die Randrippen der Paletten entlanggleiten. Es ergibt sich dann, soweit es die Funktion angeht, das gleiche Querschnittsbild wie in Figur 6 und 7 gezeichnet.

Nach einer weiteren Abänderung ist es auch möglich, die Keilform umzukehren, das heißt anstelle einer Randrippe wie für die Palette 66 in Figur 8 dargestellt eine Außennut 65 vorzusehen und entsprechend für die Rollen, wie für die Rolle 67 gezeichnet, eine Umfangsrippe 68 vorzusehen. Die Winkelanordnungen und der formschlüssige Eingriff ist dann entsprechend wie im Text zu Figur 6 und 7 erläutert und auch der Höhenausgleich kann entsprechend erfolgen. Auch statt der Rolle 67 kann man einen entsprechend geformten Gleiter vorsehen.

Die Wirkungsweise der Vorrichtung aus Figur 1 - 7 ist folgende:
Der Palettenwechsel aus der in Figur 1 dargestellten Position, in der auf der Palette 5 angeordnete oder montierte Werkstücke, die nicht dargestellt sind, bearbeitet werden, wird ausgelöst durch ein äußeres Signal von einer Steuervorrichtung, die den Motor 20 einschaltet. Das führt zu zwei vollen Umdrehungen der Walze 17, die im Anschluß daran wieder in der gezeichneten Stellung stillgesetzt wird. Durch Beginn der Drehbewegung der Walze gerät der Mitnehmer 13 der in Bearbeitungsposition befindlichen Palette 5 in den axialen Auslaufabschnitt 31, erhält dabei durch die Austriebskurve 70 einen Schubs, verläßt die Führungsnut 16 und gleichzeitig gerät der Mitnehmer 14 der in Bereitstellungsposition befindlichen Palette 6 in den ersten Gang 28 der Führungsnut, so daß diese Palette in Förderrichtung 4 vorgeschoben wird. Dieser Vorschub erfolgt entsprechend der hohen Drehzahl des Motors 20 mit wesentlich höherer Fördergeschwindigkeit in Pfeilrichtung 4 als der Vorschub durch die langsam umlaufenden Gurtbänder 2, 3.

Die Palette 6 wird in etwa 0,4 sec. (Sekunden) durch die Walze 17 in die Position der Palette 5 getrieben und schiebt dabei die Palette 5 vor sich her, die sich dann anschließend auf die Gurtbänder 2, 3 absenkt und von diesen weitergefördert wird. Die Gurtbänder hätten statt der 0,4 sec. 12,0 sec. benötigt, die Palette 6 in die Bearbeitungsposition zu tragen.

Der Vorschub der Palette 6 ist beendet, sobald der Mitnehmer 14 in die Position, in der der Mitnehmer 13 in Figur 1 gezeichnet ist, einnimmt.

4

In Endstellung der Walze 17 oder kurz davor findet der Mitnehmer der nächstfolgenden Palette 7 Eingang in den axialen Abschnitt 32 bis zum Anschlag 36 und gelangt in die Stellung, in der der Mitnehmer 14 in Figur 1 gezeichnet ist. Die Folge ist, daß die Palette 7 sich nun in Bereitstellungsposition befindet. Alle nachfolgenden Paletten stoßen durch die Schubwirkung der Gurtbänder aneinander und rutschen beim Vorschub der Palette 7 um eine Palettenposition nach. Im Anschluß daran liegen sie, wie auch die in Bereitstellungsposition befindliche Palette 7, auf den darunter rutschenden Gurtbändern 2, 3.

Die Palette 6 ist auf ihrem Wege in die Bearbeitungsposition zunächst von den Rollen 48, 53 am vorderen Ende angehoben worden und dann von den Rollen 47, 52 am hinteren Ende hochgeschwenkt worden und läuft dann, losgelöst von den Gurtbändern 2, 3, durch die Rollen 45, 46, 50, 51 in die für die Palette 5 gezeichnete Bearbeitungsposition hinein.

Bemerkenswert ist, daß der Vorschub zum Palettenwechsel mit vielfach höherer Geschwindigkeit als der Umlaufgeschwindigkeit der Gurtbänder 2 und 3 entspricht erfolgen kann. Bemerkenswert ist weiter, daß die Paletten in ihrer Bearbeitungsposition selbsttätig, solide, präzis in einer vorgegebenen, orthogonal ausgerichteten Position fixiert sind. Bemerkenswert ist weiterhin, daß für den ganzen Wechselvorgang nur ein einziges Element aktiv durch einen Antrieb verstellt werden muß, nämlich die Walze 17. Für die Anschläge sind keine besonderen Verstellorgane erforderlich, weil sie in die Walze integriert sind und zum Anheben und Fixieren der in Bearbeitungsposition befindlichen Palette dienen neben ihrer Führungsfunktion die Rollen 45 bis 54, die nicht besonders angetrieben werden müssen.

## Patentansprüche

1. Palettenwechsler für eine lineare horizontale Förderbahn, mit einer Walze ( 17 ) als Förderelement, die um eine Achse ( 18 ) parallel zur Förderrichtung der Förderbahn drehbar gelagert ist, auf ihrem Umfang eine mit einem an einer Palette ( 5, 6 ) angeordneten Führungselement ( 13, 14 ) zusammenwirkende, wendelförmige Führungsnut ( 16 ) aufweist, zur jeweiligen Walzenstirnseite hin offen ist und sich von einem Anschlag ( 36 ) für eine in Bereitstellungsposition befindliche Palette ( 6 ) bis zu einem diesem nachgeordneten Anschlag ( 35 ) für eine in Bearbeitungsposition befindliche Palette ( 5 ) erstreckt, für die in Bearbeitungsposition befindliche Palette einen sich in Umfangsrichtung erstreckenden Nutenabschnitt ( 29 ) aufweist und für jeden Palettenwechsel rotierend angetrieben wird, wobei ein angetriebener Doppelgurt ( 2, 3 ) als Förderunterlage für die Paletten vorgesehen ist, der sich über die in Bereitstellungsposition und über die in Bearbeitungsposition befindlichen Paletten ( 5 ) erstreckt, dadurch gekennzeichnet,

daß die Führungsnut ( 16 ) an beiden Enden der Walze ( 17 ) einen, den betreffenden Anschlag ( 35, 36 ) bildenden, sich in Umfangsrichtung erstreckenden Nutenabschnitt ( 29, 30 ) aufweist und

daß beim Palettenwechsel die Walze ( 17 ) eine Palette mit einer Fördergeschwindigkeit antreibt, die wesentlich höher ist als die Fördergeschwindigkeit des Doppelgurtes ( 2, 3 ).

2. Palettenwechsler nach Anspruch 1, dadurch gekennzeichnet,

daß der der Bearbeitungsposition ( 5 ) zugeordnete Nutenabschnitt in einen achsparallel gerichteten Auslaufabschnitt ( 31, 32 ) mündet mit einer Austriebskurve ( 70 ) an der Rückwand.

3. Palettenwechsler nach einem der vorhergehenden Ansprüche, dadurch gekennzeichnet,

daß ein Antriebsmotor ( 20 ) für die Walze ( 17 ) eine Nockenscheibe ( 21 ) antreibt mit einem Untersetzungsverhältnis zwischen Nockenscheibe und Walze entsprechend der Zahl der Gänge (27, 28) der Führungsnut ( 16 ) und

daß der Nockenscheibe ein von einem Nocken ( 25 ) ansteuerbarer Ausschalter ( 26 ) für den Antriebsmotor zugeordnet ist.

4. Palettenwechsler nach einem der vorhergehenden Ansprüche, dadurch gekennzeichnet,

daß je beidseitig sich in Förderrichtung ( 4 ) erstreckende, gerade Randschienen (8, 9) aufweisende Paletten (5 - 7) eingesetzt werden,

daß beide Randschienen je zwei, einen zur Seite offenen Keilwinkel ( 43 ) bildende, sich über die ganze Randschienenlänge erstreckende Keilflächen (40, 41) aufweisen, die mit da hinein formschlüssig passenden Keilelementen (45 - 54) zusammenwirken,

daß ein oder mehrere Keilelemente (49, 54) beidseitig am förderabwärtigen Ende einer in Bereitstellungsposition befindlichen Palette ( 6 ) angeordnet sind,

daß die Höhenlage dieser der Bereitstellungsposition zugeordneten Keilelemente jeder Seite der Höhenlage einer auf den Gurtbändern (2, 3) liegenden Palette (6, 7) entspricht und

daß die Höhenlage der folgenden, der Bearbeitungsposition zugeordneten Keilelemente (45 - 53) der Höhenlage einer von den Gurtbändern um einen zur Entkupplung hinreichenden kleinen Betrag von 0,3 bis 10 mm (Millimeter), vorzugsweise 0,8 mm, abgehobene Palette ( 5 ) entspricht.

5. Palettenwechsler nach Anspruch 4, dadurch gekennzeichnet,

daß die der Bereitstellungsposition zugeordneten Keilelemente (49, 54) durch Spiel beim formschlüssig passenden Zusammenwirken und/oder durch Höhenverstellung zwischen zwei Endstellungen zum Höhenausgleich eingerichtet sind und

daß alle der Bearbeitungsposition zugeordneten Keilelemente (45 - 53) am Gehäuse ( 19 ) des Horizontalförderers, bezogen auf alle rämlichen Richtungen, ortsfest befestigt sind.

6. Palettenwechsler nach Anspruch 4 oder 5, dadurch gekennzeichnet,

daß die Keilflächen (40, 41) eine dachförmige, mit abgeflachter Spitze nach außen ragende Randrippe ( 9 ) bilden und

daß die Keilelemente (45 - 54) um vertikale Achsen drehbar gelagerte Rollen sind, die je eine keilförmige Umfangsnut ( 44 ) aufweisen.

## Claims

Pallet exchanger for a linear, horizontal conveyor, with a roller (17) as the conveying element, which is rotatably mounted about a shaft (18) parallel to the conveyor conveying direction, has on its circumference a helical guide slot (16) cooperating with a guide element (13, 14) located on a pallet (5, 6), which is open towards the roller end face and extends from a stop (36) for a pallet (6) in the readiness position up to a stop (35) following the same for a pallet (5) in the handling position, has for the pallet in the handling position a circumferentially extending slot portion (29) and for each pallet change is driven in a rotary manner, a driven double belt (2, 3) being provided as a conveyor substrate for the pallets and which extends over the pallets (5) in the readiness position and in the handling position, characterized in that

at both ends of the roller (17) the guide slot (16) has a circumferentially extending slot portion (29, 30) forming the particular stop (35, 36) and that

on changing the pallet the roller (17) drives a pallet at a conveying speed which is significantly higher than the conveying speed of the double belt (2, 3).

2. Pallet exchanger according to claim 1, characterized in that

the slot portion associated with the handling position (5) issues into an axially parallel directed discharge portion (31, 32) with an ejection cam (70) on the rear wall.

3. Pallet exchange according to one of the preceding claims, characterized in that

a drive motor (20) for the roller (17) drives a cam disk (21) with a reduction ratio between the cam disk and the roller corresponding to the number of intervals (27, 28) of the guide slot (16) and that with the cam disk is associated a drive motor disconnecting switch (26) controlled by a cam (25).

4. Pallet exchanger according to one of the preceding claims, characterized in that

in each case pallets (5, 7) having straight marginal rails (8, 9) extending on either side in the conveying direction (4) are used, that both marginal rails in each case have two wedge surfaces (40, 41) extending over the entire marginal rail length and forming a wedge angle (43) which is open to the side and which cooperate with the wedge elements(45 to 54) fitting positively therein, that one or more wedge elements (49, 54) are arranged on either side at the conveyor-remote end of a pallet (6) in the readiness position, that the height position of said wedge elements associated with the readiness position corresponds to the side of the height position of a pallet (6, 7) located on the belts (2, 3) and that the height position of the following wedge elements (45-53) associated with the handling position corresponds to the height position of a pallet (5) raised from the belt by a small amount adequate for decoupling of 0.3 to 10 mm and preferably 0.8 mm.

5. Pallet exchanger according to claim 4, characterized in that

the wedge element (49, 54) associated with the handling position are set up for height compensation by clearance in the case of positively matching cooperation and/or by height adjustment between two end positions and that all the wedge elements (45-53) associated with the handling position are fixed on the casing (19) of the horizontal conveyor, relative to all spatial directions.

6. Pallet exchanger according to claim 4 or 5, characterized in that

the wedge surfaces (40, 41) form a roof-shaped marginal rib (9) projecting outwards with a flattened point and that the wedge elements (45 to 54) are rolls mounted so as to rotate about vertical axes and which in each case have a wedge-shaped circumferential slot (44).

## Revendications

1. Echangeur de palettes pour un transporteur horizontal linéaire, comprenant un cylindre (17) comme élément de transport, qui est monté rotatif autour d'un axe (18) parallèle à la direction de transport du transporteur, présente sur sa périphérie une rainure de guidage (16) hélicoïdale coopérant avec un élément de guidage (13, 14) disposé sur une palette (5, 6), est ouvert vers l'extrémité de cylindre correspondante et s'étend depuis une butée (36) pour une palette (6) se trouvant en position d'attente jusqu'à une butée (35) disposée à sa suite pour une palette (5) se trouvant en position d'usinage, présente un segment de rainure (29) s'étendant en direction circonférentielle pour la palette se trouvant en position d'usinage et est entraîné en rotation pour chaque échange de palettes, avec prévision d'une double courroie commandée (2, 3) en tant que support pour le transport des palettes, qui s'étend sur les palettes (6, 5) se trouvant en position d'attente et en position d'usinage, caractérisé en ce

que la rainure de guidage (16) présente un segment de rainure (29, 30) aux deux extrémités du cylindre (17), segment de rainure qui s'étend dans la direction circonférentielle et forme la butée (35, 36) concernée et

que, lors de l'échange de palettes, le cylindre (17) entraîne une palette à une vitesse de transport qui est nettement plus élevée que la vitesse de transport de la double courroie (2, 3).

2. Echangeur de palettes selon la revendication 1, caractérisé en ce

que le segment de rainure coordonné à la position d'usinage (5) débouche dans un segment de sortie (31, 32) orienté parallèlement à l'axe et possédant une courbe d'expulsion (70) sur le flanc arrière.

3. Echangeur de palettes selon une des revendications précédentes, caractérisé en ce

qu'un moteur d'entraînement (20) pour le cylindre (17) entraîne une came discoïde (21) avec un rapport de démultiplication entre la came et le cylindre qui correspond au nombre des spires (27, 28) de la rainure de guidage (16) et

qu'un interrupteur d'arrêt (26) pour le moteur d'entraînement est coordonné à la came et peut être actionné par un bossage (25) de la came.

4. Echangeur de palettes selon une des revendications précédentes, caractérisé en ce

que l'on utilise des palettes (5-7) présentant sur les deux côtés des barres de bordure droites (8, 9) s'étendant dans la direction de transport (4),

que les deux barres de bordure présentent chacune deux faces de coin (40, 41) s'étendant sur toute la longueur des barres de bordure et formant un angle de coin (43) ouvert vers le côté, qui coopèrent avec des éléments de coin (45-54) s'ajustant à complémentarité de formes dans ces faces de coin,

qu'un ou plusieurs éléments de coin (49, 54) sont disposés sur les deux côtés à l'extrémité avant, dans le sens du transport, d'une palette (6) se trouvant en position d'attente,

que la position en hauteur de ces éléments de coin coordonnés à la position d'attente, correspond, sur chaque côté, à la position en hauteur d'une palette (6, 7) reposant sur les courroies plates (2, 3) et

que la position en hauteur des éléments de coin suivants (45-53), coordonnés à la position d'usinage, correspond à la position en hauteur d'une palette (5) qui est soulevée des courroies plates d'une faible quantité suffisante pour le désaccouplement, de 0,3 à 10 mm (millimètres), de préférence de 0,8 mm.

5. Echangeur de palettes selon la revendication 4, caractérisé en ce

que les éléments de coin (49, 54) coordonnés à la position d'attente sont agencés en vue d'une compensation en hauteur au moyen d'un jeu dans le cas d'une coopération avec ajustement à complémentarité de formes et/ou au moyen d'un réglage en hauteur entre deux positions extrêmes et

que tous les éléments de coin (45-53) coordonnés à la position d'usinage sont fixés de façon stationnaire par rapport à toutes les directions spatiales sur le bâti (19) du transporteur horizontal.

6. Echangeur de palettes selon la revendication 4 ou 5, caractérisé en ce

que les faces de coin (40, 41) forment une nervure marginale (9) dirigée vers l'extérieur,de forme en dièdre avec un sommet aplati et

que les éléments de coin (45-54) sont des galets rotatifs autour d'axes verticaux et présentant chacun une rainure périphérique (44) en forme de coin.

FIG. 2

FIG. 3

FIG. 1

FIG. 5

FIG. 4

FIG. 6

FIG. 7

FIG. 8